**Europäisches Patentamt**

**European Patent Office**

**Office européen des brevets**

(19)

(11) Numéro de publication: **0 025 753**
**A1**

(12)

# DEMANDE DE BREVET EUROPEEN

(21) Numéro de dépôt: 80401274.8

(22) Date de dépôt: 05.09.80

(51) Int. Cl.³: **H 04 L 11/20, H 04 Q 11/04**

(30) Priorité: 10.09.79 FR 7922576

(43) Date de publication de la demande: 25.03.81
**Bulletin 81/12**

(84) Etats contractants désignés: **BE DE GB NL SE**

(71) Demandeur: **LE MATERIEL TELEPHONIQUE THOMSON-CSF, 146 Boulevard de Valmy, F-92707 Colombes Cedex (FR)**

(72) Inventeur: **Dieudonne, Marc Paul Georges, "THOMSON-CSF" - SCPI 173, Boulevard Haussmann, F-75360 Paris Cedex 08 (FR)**

(74) Mandataire: **Desperrier, Jean-Louis et al, "THOMSON-CSF" - SCPI 173, Bld Haussmann, F-75360 Paris Cedex 08 (FR)**

(54) **Interface de passage à une liaison de transmission en mode "paquets" à partir d'une liaison de transmission numérique d'un autre mode.**

(57) Cette interface comporte un premier niveau logique (1) de réception de la liaison numérique (2) et un second niveau logique d'empaquetage constitué essentiellement d'une seule mémoire (20) qui s'adresse elle-même en écriture par l'intermédiaire d'un registre d'adressage (22).

L'invention s'applique à la transmission de données et notamment à la téléphonie.

Fig.3

INTERFACE DE PASSAGE A UNE LIAISON DE TRANSMISSION EN MODE "PAQUETS"
A PARTIR D'UNE LIAISON DE TRANSMISSION NUMERIQUE D'UN AUTRE MODE.

L'invention concerne une interface pour passer d'une liaison
de transmission numérique à une liaison de transmission en mode
"paquets" ; cette interface est utilisée en téléphonie et notamment
à l'entrée d'un réseau de commutation de données par paquets.

On appelle transmission numérique tout mode de transmission
dans lequel le signal est constitué par une succession d'éléments
binaires. Ce type de transmission est utilisé pour la transmission
d'informations diverses telles que des signaux vidéo, des données
informatiques, des signaux de parole en téléphonie, etc... En téléphonie, on utilise généralement pour transmettre la parole une
transmission numérique en mode "MIC".

On appelle mode "MIC" ou "modulation par impulsion et codage"
un mode de transmission dans lequel un signal est échantillonné et
la grandeur de chaque échantillon par rapport à une référence fixe
est quantifiée et convertie par codage en un signal numérique.
Sur une liaison de transmission en mode "MIC", les échantillons
relatifs à plusieurs conversations sont multiplexés par répartition
dans le temps. Les caractéristiques de transmission en mode "MIC"
sont définies par les avis G.732 et G.733 des normes internationales données par le CCITT.

On appelle mode "paquets" un mode de transmission utilisé
pour transmettre toute donnée numérique ou mise sous forme numérique, dans lequel les éléments binaires sont groupés en blocs
ou paquets et on associe à chaque bloc des signaux de commande et
éventuellement de protection contre les erreurs. Le format de
paquet définit la taille et le contenu des diverses zones qui
constituent le paquet.

Une interface pour passer d'une liaison numérique à une
liaison en mode "paquets" comporte un premier niveau logique qui
assure les fonctions classiques propres à la réception d'une
liaison numérique telles que la récupération du rythme d'horloge
et de la donnée, la recherche et le suivi de la synchronisation
et la mémorisation des échantillons.

Cette interface comporte un second niveau logique ou circuit d'empaquetage qui peut être réalisé, selon une conception classique, à l'aide d'une mémoire de parole entrante et d'une mémoire d'adresse associée à la mémoire de parole. Mais, alors que dans les interfaces classiques la mémoire de parole entrante est écrite au rythme de l'horloge distante et lue au rythme de l'horloge locale à l'aide du contenu de la mémoire d'adresse, dans le cas présent écriture et lecture de la mémoire de parole entrante se font toutes deux au rythme de l'horloge distante de manière à ne pas perdre d'élément binaire.

Cette particularité permet de réaliser l'interface d'une façon totalement différente qui offre de nombreux avantages au point de vue délai de transmission, coût de l'interface et sécurité de fonctionnement.

Selon une caractéristique de l'invention, le circuit d'empaquetage est constitué à partir d'une et une seule mémoire à lecture et écriture qui s'adresse elle-même en écriture, c'est-à-dire que l'écriture d'une donnée à émettre est précédée d'une lecture de l'adresse où l'écrire qui est mémorisée dans un registre d'adressage.

Selon une autre caractéristique de l'invention, les entrées de données de la mémoire sont reliées via un premier multiplexeur d'une part aux huit sorties d'octet en parallèle du premier niveau logique et d'autre part à un calculateur, les sorties de la mémoire sont reliées premièrement aux entrées d'un registre de sortie parallèle-série dont l'entrée d'horloge reçoit un signal obtenu par multiplication de fréquence à partir du signal d'horloge distante reconstitué par le premier niveau logique et dont la sortie est reliée à la liaison de transmission en mode "paquets", deuxièmement à un registre d'adressage et troisièmement au calculateur, et, les entrées d'adressage de la mémoire sont reliées via un second multiplexeur aux sorties du compteur du premier niveau logique, aux sorties du registre d'adressage et au calculateur, les multiplexeurs et l'entrée de validation du registre de sortie étant commandés par un circuit logique dont les entrées sont reliées aux sorties du compteur du premier niveau logique et aux sorties de code de la mémoire et qui joue le rôle de séquenceur, ce qui permet de réaliser les fonctions de mémorisation et d'adressage par la même mémoire qui s'adresse elle-même via le registre d'adressage.

Les objets et caractéristiques de la présente invention apparaîtront plus clairement à la lecture de la description suivante d'exemples de réalisation, ladite description étant faite en relation avec les dessins ci-annexés dans lesquels :

- la figure 1 représente de façon succincte un exemple de réalisation de l'interface de conception classique ;
- la figure 2 représente le diagramme des temps relatif au fonctionnement du circuit représenté à la figure 1 ;
- la figure 3 représente un exemple de réalisation du circuit d'empaquetage, conforme à l'invention ;
- la figure 4 représente le diagramme des temps relatif au fonctionnement du circuit représenté à la figure 3 ;
- la figure 5 représente l'organigramme de fonctionnement du circuit logique schématisé à la figure 3.

Avant de décrire ces exemples de réalisation, on précise les caractéristiques du mode de transmission numérique et le format des paquets qui correspondent à ces exemples.

Le mode de transmission numérique utilisé est le mode "MIC" défini par l'avis G.732 du CCITT, dans lequel une trame "MIC" comprend 32 voies (ou intervalles de temps) qui contiennent chacune un échantillon de huit éléments binaires (ou eb) relatif à une conversation sauf pour la première voie (ou ITO) réservée aux informations de synchronisation et la dix-septième (ou IT16) qui contiennent des informations de signalisation, et la fréquence de transmission est de $2,048.10^6$ eb/s.

Quant au mode "paquets", dans les exemples qui seront décrits ci-après chaque paquet est autodirigé, c'est-à-dire qu'il comporte une première zone qui contient un en-tête autodirecteur comportant, dans l'ordre de traversée des opérateurs dans le réseau, la succession des adresses de portes de sortie à utiliser à raison d'une adresse par opérateur. Le nombre d'éléments binaires de l'en-tête est égal au nombre maximal d'opérateurs traversés dans le réseau multiplié par le nombre d'éléments binaires nécessaires pour coder l'adresse d'une porte de sortie, dans ces exemples l'en-tête contient soixante-quatre éléments binaires au plus. Une seconde zone contient les données, dans ces exemples elle contient huit octets, c'est-à-dire soixante-quatre éléments binaires.

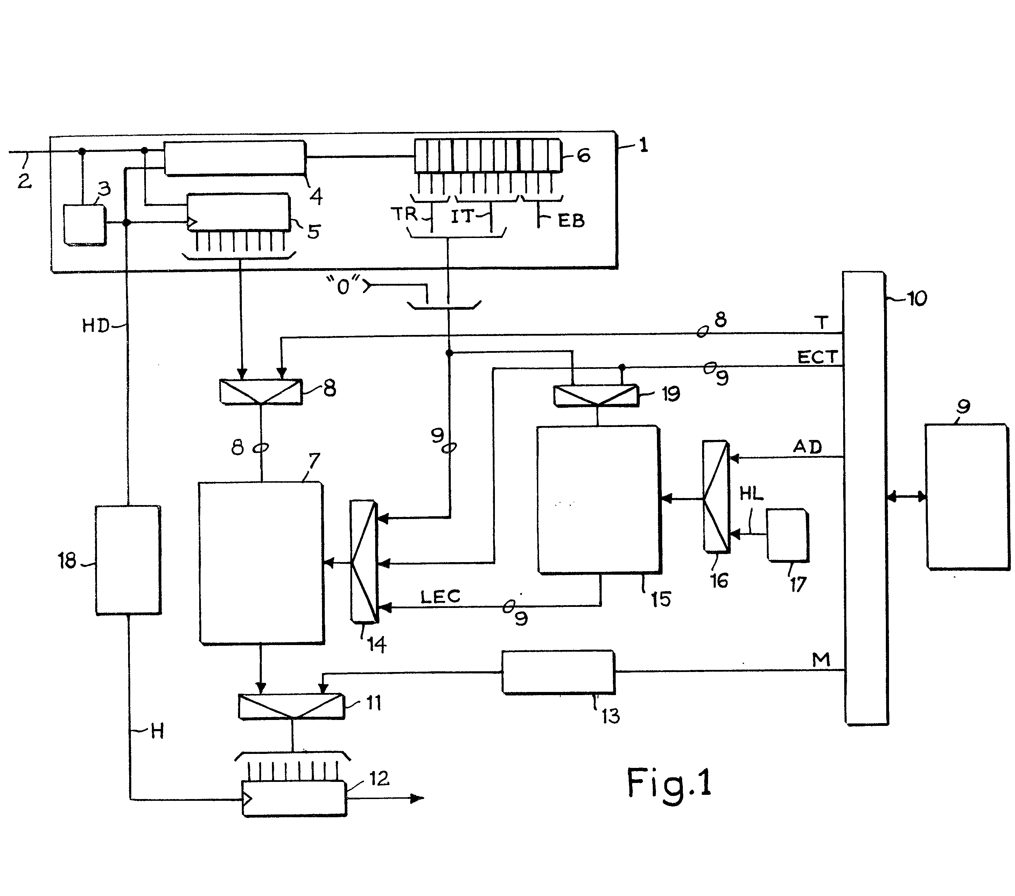

L'interface de conception classique, représentée à la figure 1, comporte un premier niveau logique 1 qui assure les fonctions classiques propres à la réception d'une jonction "MIC" 2.

Ce premier niveau logique comporte notamment un circuit 3 de reconstitution de l'horloge distante qui fournit un signal HD, un circuit de réception et de synchronisation 4, un registre 5 série-parallèle qui reçoit la jonction et dont l'entrée d'horloge reçoit le signal HD, et, un compteur 6, à x+8 éléments binaires, activé par un signal issu du circuit 4. Ce compteur 6 donne l'identité de l'octet présent à la sortie du registre, c'est-à-dire le numéro de la trame à laquelle il appartient sur x éléments binaires TR, x étant le nombre entier immédiatement supérieur ou égal au logarithme en base 2 du nombre m maximal d'octets que peut comporter un paquet, (dans cet exemple m est égal à 8 et x à 3), et le numéro de la voie à laquelle il appartient sur cinq éléments binaires IT. Le compteur 6 fournit également un numéro d'élément binaire sur trois éléments binaires EB.

Le second niveau logique comporte une mémoire 7 de parole et d'en-têtes de 512 mots de 8 eb, soit 32x8 octets de parole et 32x8 octets d'en-têtes, dont les entrées sont reliées via un multiplexeur 8 d'une part aux sorties du registre 5 et d'autre part à un calculateur 9, par l'intermédiaire d'une interface 10, duquel elle reçoit un signal T sur 8 fils en parallèle.

Ce calculateur 9 est généralement le calculateur du niveau supérieur de l'opérateur de commutation d'entrée de la jonction MIC concernée dans le réseau.

Les sorties de la mémoire 7 sont reliées via un multiplexeur 11 aux entrées d'un registre 12 parallèle-série qui reçoit comme signal d'horloge un signal H, obtenu à partir du signal HD en multipliant sa fréquence par quatre à l'aide du circuit 18, et dont la sortie fournit les informations en mode "paquets".

Ce registre 12 reçoit également via le multiplexeur 11 des paquets unitaires de messages M provenant du calculateur 9, via l'interface 10 et une mémoire 13 de type FIFO "premier entré, premier sorti". Ces paquets de messages sont échangés entre les opérateurs du réseau de commutation pour établir une communication.

Les entrées d'adressage de la mémoire 7 reçoivent via un multiplexeur 14 soit les signaux TR et IT issus du compteur 6, soit un signal ECT issu du calculateur 9, soit un signal LEC issu d'une mémoire 15 d'adresse de type à lecture et écriture adressée, via un multiplexeur 16, en écriture par le calculateur 9 qui lui fournit le signal AD et en lecture par le signal HL issu de l'horloge locale 17. La mémoire 15 comporte 512 mots de 9 eb pour adresser la mémoire 7 et elle reçoit en entrée via un multiplexeur 19 soit les signaux ECT, soit les signaux "0", TR, IT.

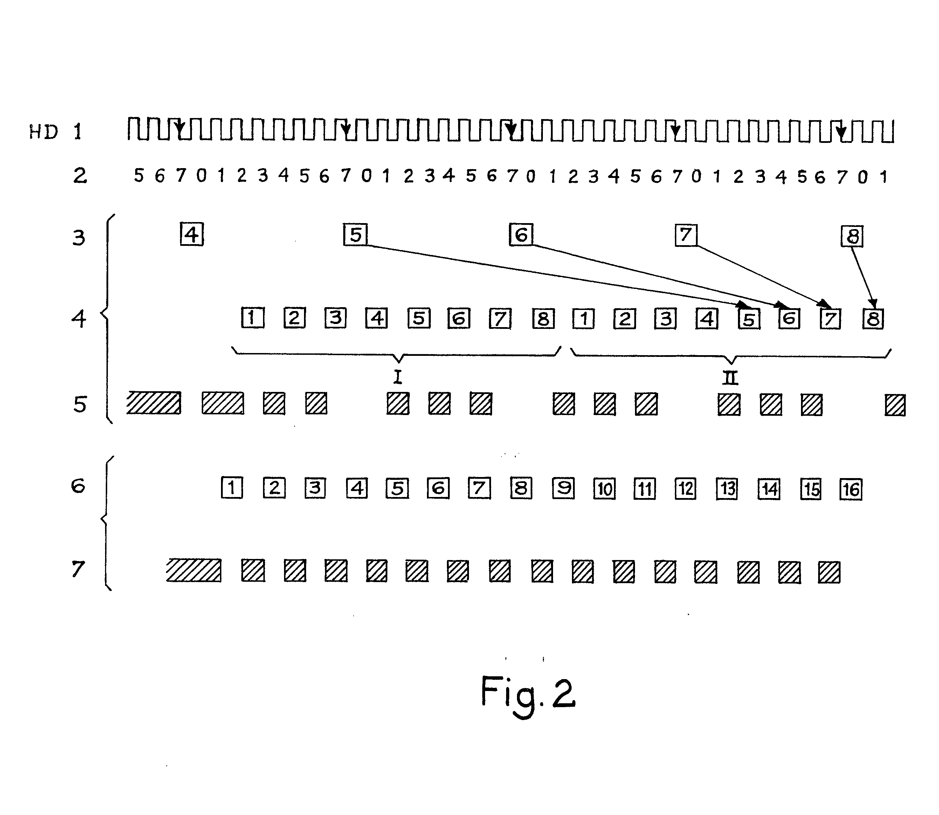

Le fonctionnement de ce premier exemple est expliqué à l'aide de la figure 2 de façon succincte, car il n'est pas l'objet de l'invention comme on l'a expliqué plus haut.

La première ligne de la figure 2 représente l'allure du signal d'horloge HD à 2,048 Mrb/s, c'est-à-dire qu'une période de 488 ns correspond à un élément binaire.

La seconde ligne donne la valeur décimale du contenu des signaux EB de numéro d'élément binaire du compteur 6.

Les trois lignes suivantes concernent la mémoire 7 de parole et d'en-tête. La ligne 3 correspond à l'écriture des octets dans la mémoire 7. Chaque fois qu'un octet est présent en entier à la sortie du registre 5, c'est-à-dire chaque fois que les éléments binaires EB du compteur sont à 7 ou $111_2$, il est écrit à l'adresse donnée par son identité (numéro de trame et numéro de voies) précédée de l'élément binaire "0" car c'est la première moitié de la mémoire 7 qui est réservée aux octets de parole.

La ligne 4 correspond à la lecture de la mémoire 7, c'est-à-dire à l'émission des paquets dont les adresses sont données par les signaux LEC. Le premier groupe I de huit octets correspond à l'en-tête et le second II à la parole.

Un paquet étant lu quatre fois plus rapidement qu'il n'est écrit, on déclenche l'émission d'un paquet $\frac{64+64}{4} = 32$ périodes du signal d'horloge HD avant l'écriture dans la mémoire 7 de parole et d'en-tête du dernier octet de ce paquet. Cette façon de procéder est celle qui retarde le paquet du minimum de temps.

A la ligne 5 sont hachurés les temps restant disponibles pour l'accès, en écriture ou en lecture, du calculateur 9 à la mémoire 7. Pendant ces temps disponibles, le calculateur 9 écrit dans la mémoire 7 les en-têtes, donnés par les signaux T, aux adresses données par les signaux ECT.

Les lignes 6 et 7 de la figure 2 concernent la mémoire 15 d'adresse. La ligne 6 correspond à la lecture de la mémoire 15 qui fournit les adresses LEC à la mémoire 7 ; la lecture de l'adresse précède bien entendu la lecture dans la mémoire 7, comme le montrent les lignes 4 et 6. La lecture de la mémoire 15 est cyclique et l'adresse de lecture progresse au rythme de l'horloge locale HL synchronisée avec l'horloge distante.

A la ligne 7 sont hachurés les temps restant disponibles pour l'accès, en écriture ou en lecture, du calculateur 9. Pendant ces temps disponibles, le calculateur 9 gère, via le multiplexeur 19 et les entrées des signaux AD d'adressage, l'écriture des adresses des octets d'en-tête ECT et de parole TR+IT dans leur ordre d'émission.

L'émission des paquets de parole est réalisée, via le registre 12, en série au rythme de 8 Meb/s du signal H et cette émission s'entrelace avec l'envoi de paquets unitaires de messages provenant de la mémoire 13.

Comme on l'a déjà remarqué plus haut, la lecture et l'écriture de la mémoire 7 de parole et d'en-tête se font au même rythme ce qui permet, car l'on dispose de mémoires suffisamment rapides, de réaliser les fonctions de la mémoire 7 de parole et d'en-tête, de la mémoire 15 d'adresse associée et de la mémoire 13 à l'aide d'une seule mémoire.

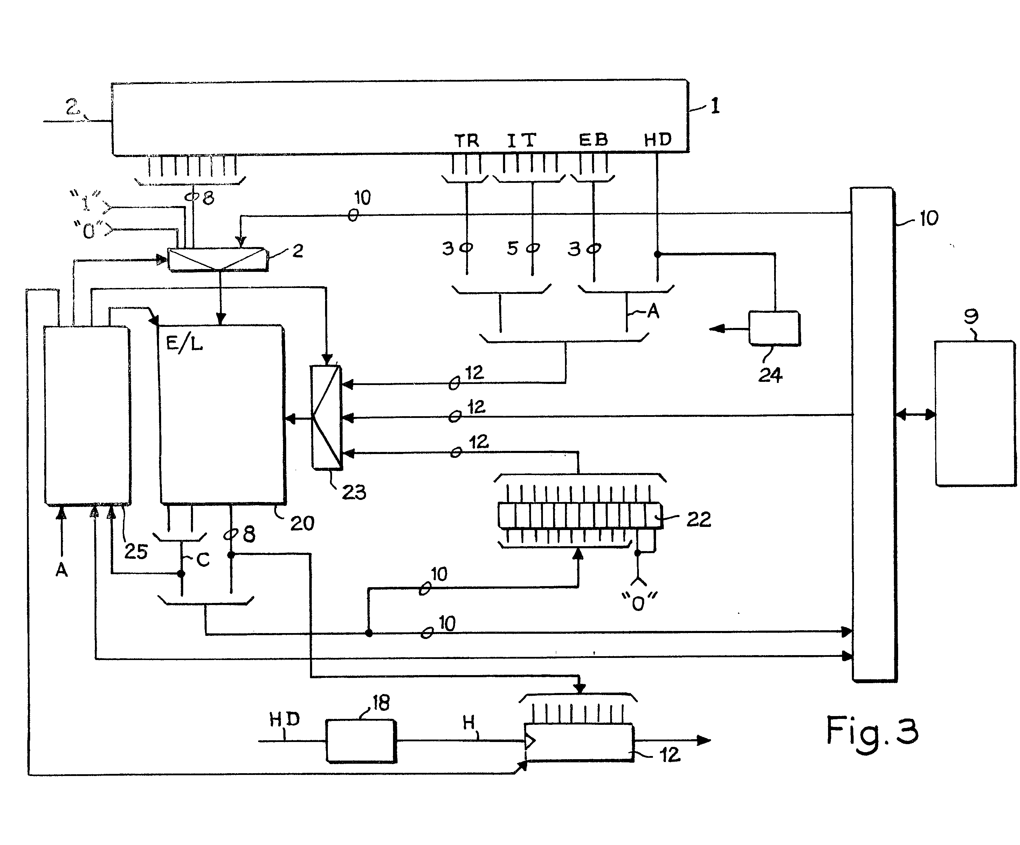

Une telle réalisation est représentée à la figure 3. Les éléments identiques portent les mêmes références dans les figures 1 et 3 et on a les mêmes hypothèses que celles prises dans la réalisation précédente.

Cette seconde réalisation comporte le même premier niveau logique 1 de réception.

Par contre, le second niveau logique comporte une et une seule mémoire 20. Cette mémoire 20 est choisie de façon à pouvoir contenir les octets de parole, de messages et les octets d'en-tête correspondants et de façon à pouvoir effectuer toutes les opérations de lecture et d'écriture nécessaires dans le temps imparti. Ainsi entre deux lectures d'octets, on doit pouvoir intercaler une lecture d'adresse de rangement et une écriture pour ranger l'octet incident ; les octets étant lus toutes les 2x488 ns pour garder les mêmes conditions d'émission que dans la première réalisation, il est nécessaire d'utiliser une mémoire ayant un temps de cycle de 244 ns, c'est-à-dire fonctionnant à 4 MHz. Actuellement les mémoires fonctionnant à ce rythme sont des mémoires de 4K mots qui sont donc adressés par des mots de douze éléments binaires.

Chaque mot inscrit dans la mémoire 20 est constitué d'un octet précédé de deux éléments binaires de code et les mots sont répartis en 256 mots pour les échantillons de parole, 256 mots pour les messages de communication, 512 mots pour les en-têtes et 256 mots d'adresse, les autres étant inutilisés et pouvant servir, par exemple, à des contrôles par le calculateur.

Les dix entrées de la mémoire 20 reçoivent, via un multiplexeur 21, soit les huit signaux issus des sorties d'octets du circuit de réception 1 précédés par deux éléments binaires de code "01", soit des signaux provenant d'un calculateur 9 via une interface 10.

Les dix sorties de la mémoire 20 sont reliées premièrement, pour huit d'entre elles correspondant à l'octet, aux entrées d'un registre de sortie parallèle-série 12 dont l'entrée d'horloge reçoit le signal d'horloge H fourni par le circuit 18 multiplicateur de fréquences et dont la sortie fournit les informations sous forme de paquets, deuxièmement, aux dix premières entrées parmi douze d'un registre 22 de mémorisation d'adresse d'écriture, et, troisièmement au calculateur 8.

Les douze entrées d'adressage de la mémoire 20 sont reliées via un multiplexeur 23, premièrement aux douze sorties du registre 22 dont les deux dernières entrées reçoivent des signaux numériques de valeur "0", deuxièmement au calculateur 9 et troisièmement aux onze sorties du compteur 6 du circuit 1 de réception ainsi qu'à la sortie du circuit 3 de reconstitution du signal d'horloge distante. L'adressage de la mémoire est commandé à l'aide d'une horloge locale 24 à 4 MHz synchronisée par l'horloge distante et qui permet un accès mémoire chaque 244 ns.

Le second niveau logique de l'interface représentée à la figure 2 comporte enfin un circuit logique 25 qui est réalisé soit par une logique câblée, soit par une mémoire programmable reliée au calculateur 9, et qui reçoit les deux éléments binaires de code C présents à la sortie de la mémoire 20 et les quatre éléments binaires A qui sont les signaux EB suivis du signal HD provenant du circuit 1. A partir des valeurs de A et C et éventuellement des informations reçues du calculateur, le circuit logique 25 assure la commande des multiplexeurs 21 et 23, de l'entrée de validation du registre 12 et de l'entrée écriture-lecture E/L de la mémoire 20. Cette logique 25 joue le rôle de séquenceur dans le fonctionnement du second niveau logique.

Avant de décrire en détail le fonctionnement de ce second niveau logique, on commence par donner la signification des codes A et C suivant leurs valeurs.

Lorsque le code A est égal à 1110, cela signifie qu'il faut lire dans la mémoire 20 à l'adresse donnée par les signaux TR+IT+A une adresse d'écriture qui servira à ranger l'échantillon qui va arriver à l'entrée de la mémoire.

Lorsque le code A est égal à 1111, cela signifie qu'il faut écrire l'échantillon présent à l'entrée de la mémoire à l'adresse d'écriture donnée précédemment.

Lorsque le code A est égal à XX00 (X signifiant que la valeur de l'élément binaire est indifférente), cela signifie qu'il faut lire le mot dont l'adresse est donnée par les signaux TR+IT+A. Dans ce cas, si le code C est égal à 10, cela signifie que l'octet lu est un début de paquet à émettre ; si le code C est égal à 01, cela signifie que l'octet lu est à émettre si un début de paquet a été émis ; si le code C est égal à 00 cela signifie que l'octet ne doit pas être émis ; enfin, si le code C est égal à 11 cela signifie que l'octet lu est le début d'un paquet à n'émettre qu'une fois et ce drapeau doit repasser immédiatement à 00 au temps suivant, ce qui est possible puisqu'une émission d'octet est toujours suivie d'un temps libre, comme on va le voir dans ce qui suit.

Lorsque le code A est égal à XX01, le calculateur est autorisé à accéder à la mémoire 20 pour une écriture ou une lecture.

Avant de pouvoir émettre des paquets, la mémoire 20 programmable doit tout d'abord être intitialisée à zéro par le calculateur.

Ensuite, le calculateur la programme pour établir les chemins semi-permanents nécessaires à l'orientation des informations contenues dans la voie s de signalisation, dans l'exemple décrit la voie 16, vers la file d'attente du niveau de commutation qui est l'entrée de messages vers le calculateur. Ce qui entraîne premièrement l'écriture dans les m mots d'adresse TRj+ITs+1110 d'un mot $x_{s,j}$ donnant l'adresse où ranger les octets de la voie s des trames successives, m étant égal à 8 et s à 16 dans cet exemple et j variant donc de 1 à 8, et, deuxièmement l'écriture d'un ou plusieurs octets d'en-tête, le premier étant précédé du code 10 et les suivants du code 01 respectivement aux adresses $x_{s,1}-4$, $x_{s,1}-8$, etc ..., l'en-tête ainsi écrit correspondant à la file d'attente de messages vers le calculateur.

Enfin, s'il s'agit d'émettre un paquet de communication ou message vers un autre opérateur, les opérations préalables à effectuer par le calculateur consistent en :
- premièrement la recherche de seize adresses consécutives terminées par XX00 inutilisées ;
- deuxièmement l'écriture des octets de messages précédés de 11 pour le premier et 01 pour les quinze autres.

Par contre, s'il s'agit d'établir une communication avec la voie i désignée par ITi, i pouvant prendre toutes les valeurs entières comprises entre 1 et 31 à l'exception de 16, les opérations préalables à effectuer par le calculateur consistent en :
- premièrement, la recherche de seize adresses consécutives terminées par XX00, inutilisées et assurant le retard minimum pour la voie considérée (la notion de retard minimum a été définie plus haut à propos de la première réalisation) ;
- deuxièmement, l'écriture des sept derniers mots de l'en-tête précédés chacun du code "01" ;

- troisièmement, l'écriture dans les m mots d'adresse TRj+ITi+1110 d'un mot $x_{i,j}$ donnant l'adresse réservée où écrire l'octet arrivant quand TR+IT+A est égal à TRj+ITi+1111 avec j variant de 1 à 8 dans notre exemple ;

- quatrièmement, l'écriture du premier mot de l'en-tête précédé du code 10 pour commencer à émettre effectivement le paquet.

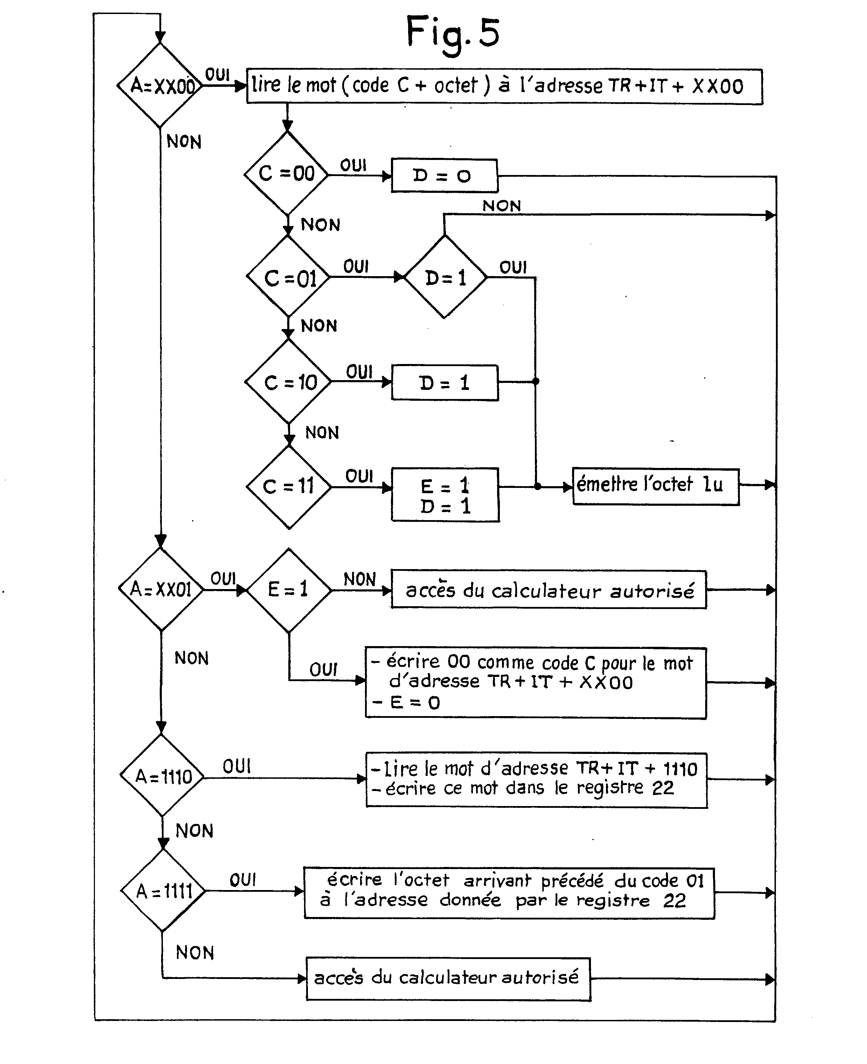

Ces préliminaires étant donnés, on explique le fonctionnement du circuit logique 25 à l'aide de l'organigramme de la figure 5.

On commence par tester la valeur de A.

Si A est égal à XX00, le circuit 25 commande la lecture du mot d'adresse TR+IT+A et teste les deux premiers éléments binaires du mot qui sont les sont les éléments binaires de code C.

Si C est égal à 00, on met un indicateur D de début de paquet à 0 et on passe ensuite au cycle suivant.

Si C est égal à 01, on teste la valeur de l'indicat    D et si D est égal à 1, le circuit 25 commande l'émission de l'octet lu ; par contre, si D n'est pas égal à 1, on passe au cycle suivant.

Si C est égal à 10, on met l'indicateur D à 1 et on émet l'octet lu, puisqu'il s'agit d'un début de paquet. On passe, ensuite au cycle suivant.

Si C est égal à 11, on met un indicateur E de début de messages et l'indicateur D à 1 et on émet l'octet lu. On passe ensuite au cycle suivant.

Si A est égal à XX01, on teste la valeur de l'indicateur E et si E est égal à 1, on écrit 00 à l'emplacement de C au lieu de 11 dans le mot d'adresse TR+IT+XX00, qui ainsi ne peut être émis qu'une fois, et on met E à 0 ; par contre, si E n'est pas égal à 1, le calculateur est autorisé à accéder à la mémoire 20 en écriture ou en lecture. On passe ensuite au cycle suivant.

Si A est égal à 1110, le circuit 25 commande la lecture du mot d'adresse TR+IT+1110  et l'écriture de ce mot dans le registre 22 ; on passe ensuite au cycle suivant.

Si A est égal à 111, le circuit 25 commande l'écriture de l'octet arrivant précédé du code 01 à l'adresse donnée par le registre 22 ; on passe ensuite au cycle suivant.

Si A n'est égal à aucune des valeurs précédentes, le calculateur est autorisé à accéder à la mémoire en écriture ou en lecture. Après l'accès du calculateur on passe au cycle suivant.

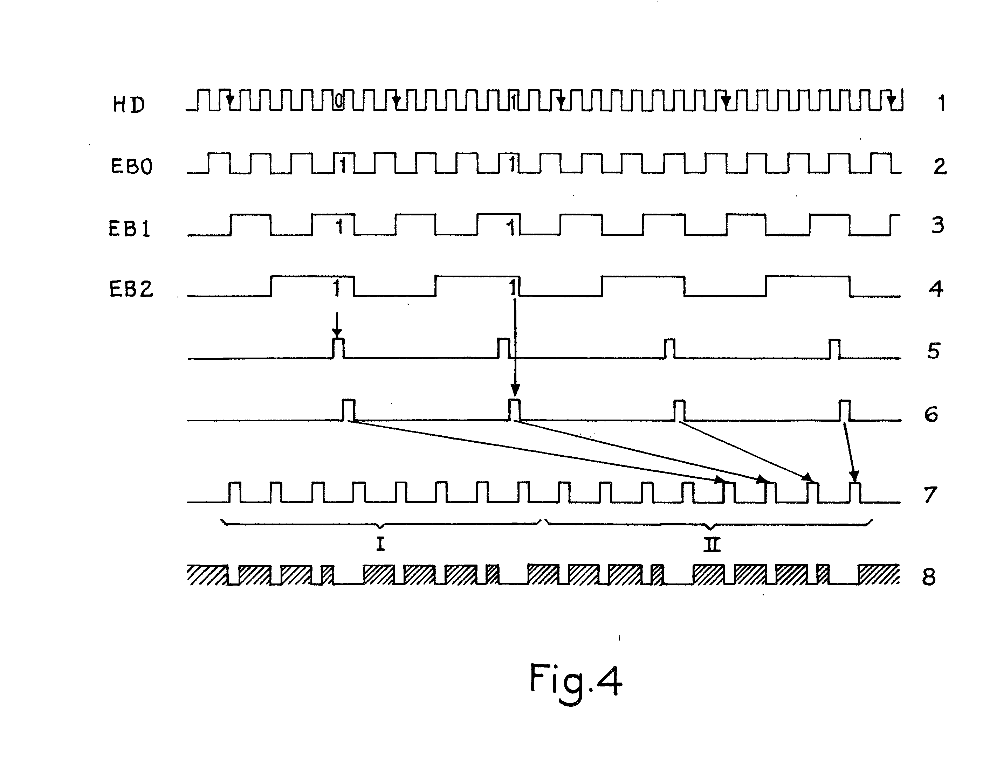

Le fonctionnement du circuit logique 25 entraîne directement le fonctionnement général du second niveau logique qui est expliqué à l'aide du diagramme des temps de la figure 4.

La première ligne de la figure 4 représente le signal d'horloge HD à 2 MHz.

Les trois lignes suivantes représentent respectivement les signaux EB0, EB1 et EB2 qui forment le signal EB et qui, associés à HD, donnent le code A.

La ligne 5 donne des impulsions de largeur 244 ns qui correspondent à la fréquence de 4 MHz d'adressage de la mémoire 20 et qui apparaissent chaque fois que le code A a la valeur 1110, c'est-à-dire chaque fois que l'on lit une adresse.

La ligne 6 représente des impulsions, du même type que celles de la ligne 5, qui apparaissent chaque fois que le code A est égal à 1111, c'est-à-dire chaque fois que l'on écrit un mot à l'adresse lue à la période précédente.

La ligne 7 représente l'émission d'un paquet avec le minimum de retard, c'est-à-dire que l'émission du dernier octet suit immédiatement l'écriture de celui-ci en mémoire. Le groupe I représente l'émission des huit octets d'en-tête, le groupe II celle des huit octets de données. L'émission du premier octet du paquet est déclenchée 32 périodes du signal d'horloge HD avant l'écriture du dernier octet dans la mémoire 20 et les émissions des octets se succèdent toutes les quatre périodes de l'horloge à 4 MHz d'adressage de la mémoire.

A la ligne 8, on a représenté les temps d'accès mémoire qui restent libres pour le calculateur.

Il est donc possible d'utiliser une mémoire unique pour réaliser ce second niveau logique, ce qui permet une diminution de matériel et par conséquent d'encombrement et de coût.

D'autre part, même si le calculateur tombe en panne cette

12

mémoire continue d'assurer le fonctionnement pour les appels établis avant la panne.

Enfin, cette mémoire étant programmable par le calculateur, cela lui permet de s'adapter à tous les schémas de commutation.

REVENDICATIONS

1. Interface pour passer d'une liaison de transmission numérique à une liaison de transmission en mode "paquets", qui comporte un premier niveau logique qui assure les fonctions classiques propres à la réception d'une liaison numérique et qui fournit les données octet par octet au rythme de l'horloge distante reconstituée, avec pour chacun son identité issue d'un compteur, caractérisée en ce qu'elle comporte un second niveau logique ou circuit d'empaquetage qui est constitué à partir d'une et une seule mémoire à lecture et écriture qui s'adresse elle-même en écriture, c'est-à-dire que l'écriture d'une donnée à émettre est précédée d'une lecture de l'adresse où l'écrire qui est mémorisée dans un registre d'adressage.

2. Interface pour passer d'une liaison de transmission numérique à une liaison de transmission en mode "paquets" selon la revendication 1, caractérisée en ce que la mémoire a d'une part ses entrées de données reliées à la liaison de transmission numérique par l'intermédiaire du premier niveau logique, d'autre part ses entrées d'adressage en lecture reliées au compteur du premier niveau logique et ses entrées d'adressage en écriture reliées au registre d'adressage lui-même relié aux sorties de la mémoire.

3. Interface pour passer d'une liaison de transmission numérique à une liaison de transmission en mode "paquets", selon la revendication 1, caractérisée en ce que les entrées de données de la mémoire sont reliées via un premier multiplexeur d'une part aux sorties d'octet en parallèle du premier niveau logique et à un code câblé et d'autre part à un calculateur, en ce que les sorties de la mémoire correspondant à l'octet sont reliées, premièrement aux entrées d'un registre de sortie parallèle-série dont l'entrée d'horloge reçoit le signal d'horloge distante reconstituée par le premier niveau logique et dont la sortie est reliée à la liaison de transmission en mode "paquets", deuxièmement, à un registre d'adressage et troisièmement, au calculateur, ces deux derniers étant également reliés aux sorties de la mémoire correspondant au code, et, en ce que les entrées d'adressage de la mémoire sont reliées via un second multiplexeur aux sorties du compteur du premier niveau logique, aux sorties du registre d'adressage et au calculateur, les multiplexeurs et l'entrée de validation du registre de sortie étant commandés par un circuit logique dont les entrées sont reliées aux sorties du compteur du premier niveau logique et aux sorties de code de la mémoire et qui joue le rôle de séquenceur ce qui permet de réaliser les fonctions de mémorisation et d'adressage par la même mémoire qui s'adresse elle-même via le registre d'adressage.

4. Interface pour passer d'une liaison de transmission numérique à une liaison de transmission en mode "paquets" selon la revendication 2 ou la revendication 3 utilisée à l'entrée d'un réseau modulaire de commutation de données par paquets dont chaque module ou opérateur comporte un calculateur, caractérisé en ce que les entrées de données et d'adressage de la mémoire sont reliées via respectivement un premier et un second multiplexeur au calculateur de l'opérateur auquel la liaison de transmission numérique est reliée.

5. Interface pour passer d'une liaison de transmission numérique à une liaison de transmission en mode "paquets" selon la revendication 1, caractérisée en ce que la mémoire est programmable, ce-qui permet de l'adapter à n'importe quel schéma de commutation par modification de la programmation.

Fig.1

1/5

0025753

Fig.2

Fig. 3

3/5

0025753

Fig.4

# Fig.5

# 0025753
Numéro de la demande

**Office européen des brevets**

## RAPPORT DE RECHERCHE EUROPEENNE

EP 80 40 1274

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | FR - A - 2 310 051 (LE MATERIEL TELEPHONIQUE)  <br> * Page 3, ligne 30 - page 6, ligne 13; figure 4 *  <br> -- | 1 | H 04 L 11/20 <br> H 04 Q 11/04 |
| A | FR - A - 2 331 221 (TERMINAUX INTEGRES DE TELECOMMUNICATIONS) <br> * Page 6, ligne 18 - page 15, ligne 11, figures 3-7 * <br> -- | 1 | |
| A | FR - A - 2 350 029 (SIEMENS) <br> * Revendication 1 * <br> ---- | 1 | |

### DOMAINES TECHNIQUES RECHERCHES (Int. Cl. ³)

H 04 L 11/20
H 04 Q 11/04

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| La Haye | 20-11-1980 | WANZEELE |

OEB Form 1503.1   06.78